(19) Europäisches Patentamt / European Patent Office / Office européen des brevets

(11) EP 3 499 882 A1

(12) EUROPEAN PATENT APPLICATION

(43) Date of publication:
19.06.2019 Bulletin 2019/25

(51) Int Cl.:
H04N 19/105 (2014.01)     H04N 19/139 (2014.01)
H04N 19/176 (2014.01)     H04N 19/54 (2014.01)

(21) Application number: 18212146.7

(22) Date of filing: 13.12.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.12.2017 US 201762597938 P

(71) Applicant: Industrial Technology Research
Institute
31040 Hsinchu (TW)

(72) Inventors:
• TSAI, Yi-Ting
  310 Hsinchu County (TW)
• LIN, Ching-Chieh
  105 Taipei City (TW)
• LIN, Chun-Lung
  114 Taipei City (TW)

(74) Representative: Becker Kurig Straus
Patentanwälte
Bavariastrasse 7
80336 München (DE)

(54) **METHOD AND IMAGE PROCESSING APPARATUS FOR VIDEO CODING**

(57) A method and an image processing apparatus (200) for video coding are proposed. The method is applicable to an image processing apparatus (200) and includes the following steps. A current coding unit (CU4A, CU4B, CU4C, CU4D, CU5A, CU7) is received, and the number of control points of a current coding unit (CU4A, CU4B, CU4C, CU4D, CU5A, CU7) is set, where the number of control points is greater than or equal to 3. At least one affine model is generated based on the number of control points, and an affine motion vector corresponding to each of the at least one affine model is computed. A motion vector predictor of the current coding unit (CU4A, CU4B, CU4C, CU4D, CU5A, CU7) is computed based on the at least one motion vector so as to accordingly perform inter-prediction coding on the current coding unit (CU4A, CU4B, CU4C, CU4D, CU5A, CU7).

Receive a current coding unit — S302

Set the number of control points of the current coding unit, where the number of control points is greater than or equal to 3 — S304

Generate at least one affine model according to the number of control points — S306

Compute an affine motion vector respectively corresponding to each of the at least one affine model — S308

Compute a motion vector predictor of the current coding unit according to all the at least one affine motion vector to accordingly perform inter-prediction coding on the current coding unit — S310

FIG. 3

**Description**

TECHNICAL FIELD

The disclosure relates to technique for video coding.

BACKGROUND

As the rapid development of virtual reality and augmented reality in entertainment industry, consumer demands on high-quality images are raising to assimilate, explore, and manipulate a virtual environment for fully immersive experience. In order to provide smooth and high-quality image frames, image coding becomes one of core technologies for image data reception and transmission under storage capacity and bandwidth constraints.

SUMMARY OF THE DISCLOSURE

Accordingly, a method and an image processing apparatus for video coding are provided in the disclosure, where coding efficiency on video images would be effectively enhanced.

In an exemplary embodiment of the disclosure, the method is applicable to an image processing apparatus and includes the following steps. A current coding unit is received, and the number of control points of a current coding unit is set, where the number of control points is greater than or equal to 3. Next, at least one affine model is generated based on the number of control points, and an affine motion vector corresponding to each of the at least one affine model is computed. A motion vector predictor of the current coding unit is then computed based on all the at least one affine motion vector so as to accordingly perform inter-prediction coding on the current coding unit.

In an exemplary embodiment of the disclosure, the image processing apparatus includes a memory and a processor, where the processor is coupled to the memory. The memory is configured to store data. The processor is configured to: receive a current coding unit; set the number of control points of the current coding unit, where the number of control points is greater than or equal to 3; generate at least one affine model according to the number of control points; compute an affine motion vector respectively corresponding to each of the at least one affine model; and compute a motion vector predictor of the current coding unit based on the at least one affine motion vector so as to accordingly perform inter-prediction coding on the current coding unit.

In order to make the aforementioned features and advantages of the present disclosure comprehensible, preferred embodiments accompanied with figures are described in detail below.

BRIEF DESCRIPTION OF THE DRAWINGS

FIG. 1A-FIG. 1B illustrate schematic diagrams of a motion vector field of a block.

FIG. 1C illustrates a schematic diagram of a coding unit having multiple moving objects.

FIG. 2 illustrates a block diagram of an image processing apparatus in accordance with an exemplary embodiment of the disclosure.

FIG. 3 illustrates a flowchart of a video coding method in accordance with an exemplary embodiment of the disclosure.

FIG. 4A-FIG. 4D illustrate schematic diagrams of setting methods of control points in accordance with an exemplary embodiment of the disclosure.

FIG. 5A illustrates a schematic diagram of a searching method of neighboring motion vectors of a control point in accordance with an exemplary embodiment of the disclosure.

FIG. 5B illustrates a schematic diagram of a current coding unit having three control points in accordance with an exemplary embodiment of the disclosure.

FIG. 5C illustrates a schematic diagram of a current coding unit having five control points in accordance with an exemplary embodiment of the disclosure.

FIG. 6 illustrates a flowchart of a setting method of control points in accordance with an exemplary embodiment of the disclosure.

FIG. 7 illustrates a schematic diagram of a setting method of control points in accordance with an exemplary embodiment of the disclosure.

DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts. Indeed, various embodiments of the invention may be embodied in many different forms and should not be construed as limited to the embodiments set forth herein; rather, these embodiments are provided so that the claimed disclosure will satisfy applicable legal requirements.

In the Joint Video Expert Team (JVET) conference, collaboratively hosted by the Telecommunication Standardization Sector (ITU-T) and the Moving Picture Experts Group (MPEG), the Video Coding (H.266/VVC) is proposed to provide a coding standard with higher efficiency than that of High Efficiency Video Coding (H.265/HEVC). In response to the Call for Proposals (CfP) on video compression, three categories of technologies including standard dynamic range (SDR) videos, high dynamic range (HDR) videos, and 360 degree videos are discussed. Such three techniques involve prediction for frame coding.

The aforesaid prediction may be classified into intra-prediction and inter-prediction. The former mainly exploits the spatial correlation between neighboring blocks, and the latter mainly makes use of the temporal correlation between frames in order to perform motion-compensation prediction (MCP). A motion vector of a block between frames may be computed through motion-compensation prediction based on a translation motion model. Compared with transmitting raw data of the block, transmitting the motion vector would significantly reduce the bit number for coding. However, in the real world, there exists motions such as zoom in, zoom out, rotation, similarity transformation, spiral similarity, perspective motion, or other irregular motions. Hence, the mechanism of motion-compensation prediction based on the translation motion model would highly impact coding efficiency.

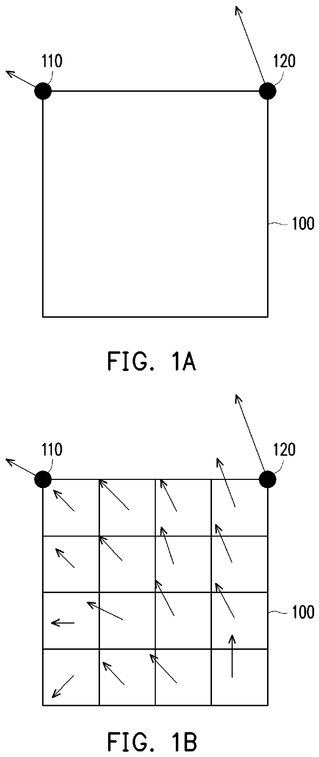

The Joint Exploration Test Model (JEM) has proposed affine motion compensation prediction, where a motion vector field (MVF) is described by a single affine model according to two control points to perform better prediction on a scene involving rotation, zoom in/out, or translation. As an example of a single block 100 illustrated in FIG. 1A, a motion vector field of a sampling position $(x, y)$ in the block 100 may be described by Eq. (1):

$$\begin{cases} v_x = \frac{(v_{1x}-v_{0x})}{w}x - \frac{(v_{1y}-v_{0y})}{w}y + v_{0x} \\ v_y = \frac{(v_{1y}-v_{0y})}{w}x + \frac{(v_{1x}-v_{0x})}{w}y + v_{0y} \end{cases} \qquad \text{Eq. (1)}$$

Herein, $v_x$ denotes a horizontal motion vector of a control point, and $v_x$ denotes a vertical motion vector of a control point. Hence, $(v_{0x}, v_{0y})$ denotes a motion vector of a control point 110, and $(v_{1x}, v_{1y})$ denotes a motion vector of a control point 120, and $w$ is a weight with respect to the width of the block 100.

To simplify the motion-compensation prediction, the block 100 may be divided into $M \times N$ sub-blocks (e.g. the block 100 illustrated in FIG. 1B is divided into $4 \times 4$ sub-blocks), a motion vector of a center sample of each of the sub-blocks may be derived based on Eq. (1), and a motion compensation interpolation filter may be applied on the motion vector of each of the sub-blocks to obtain the prediction thereof. After the motion-compensation prediction, the motion vector with high precision is rounded and saved as the same precision as a normal motion vector.

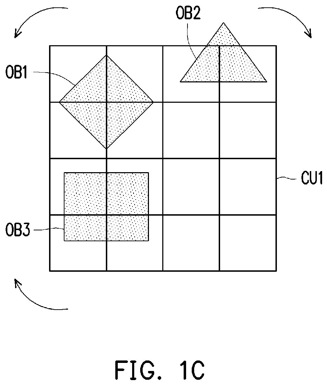

However, in order to satisfy consumer demands on high-quality videos, with an increment in video resolution, the size of each coding unit (CU) has been relatively increased. In an exemplary embodiment, it may be as large as $128 \times 128$. The existing affine motion-compensation prediction only assumes that an entire coding unit belongs to a single object. However, when a coding unit includes more than one object with different motions (e.g. a coding unit CU1 illustrated in FIG. 1C includes moving objects OBI, OB2, and OB3 with different rotation directions, where the moving object OB1 rotates counterwisely, the moving objects OB2 and OB3 rotate clockwisely but with different rotation speeds), the existing mechanism could result in false prediction. The video coding technique proposed in the exemplary embodiments of the disclosure may solve the problem of insufficient efficiency in high-resolution video due to two control points and a single affine model.

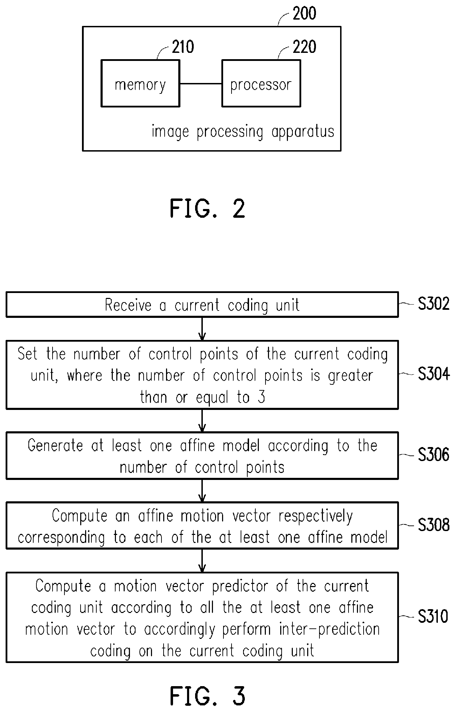

FIG. 2 illustrates a block diagram of an image processing apparatus in accordance with an exemplary embodiment of the disclosure. However, this is merely for illustrative purposes and is not intended to limit the disclosure. In an exemplary embodiment, the image processing apparatus 200 may be an encoder and/or a decoder.

Referring to FIG. 2, in the present exemplary embodiment, an image processing device 200 would at least include a memory 210 and a processor 220, where the processor 220 is coupled to the memory 210. In an exemplary embodiment, the image processing device 200 may be an electronic device such as a personal computer, a laptop computer, a server computer, a tabular computer, a smart phone, a wearable device, a work station, and so forth.

The memory 210 would be configured to store data such as images, numerical data, programming codes, and may be, for example, any type of fixed or removable random-access memory (RAM), read-only memory (ROM), flash memory, hard disc or other similar devices, integrated circuits, and any combinations thereof.

The processor 220 would be configured to control an overall operation of the image processing apparatus 200 to perform video coding and may be, for example, a central processing unit (CPU), an application processor (AP), or other programmable general purpose or special purpose microprocessor, digital signal processor (DSP), image signal processor (ISP), graphics processing unit (GPU) or other similar devices, integrated circuits, and any combinations thereof.

As a side note, in an exemplary embodiment, the image processing apparatus 200 may optionally include an image capturing device, a transmission interface, a display, and a communication unit. The image capturing device may be, for example, a digital camera, a digital camcorder, a web camera, a surveillance camcorder, and configured to capture image data. The transmission interface may be an I/O interface that allows the processor 220 to receive image data and related information. The display may be any screen configured to display processed image data. The communication data may be a modem or a transceiver compatible to any wired or wireless communication standard and configured to receive raw image data from external sources and transmit processed image data to other apparatuses or platforms. As known per se, from an encoding perspective, the processor 220 may transmit encoded bitstreams and related information to other apparatuses or platforms having decoders via the communication unit upon the completion of encoding. Moreover, the processor 220 may also store encoded bitstreams and related information to storage medium such as a DVD disc, a hard disk, a flash drive, a memory card, and so forth. The disclosure is not limited in this regard. From a decoding perspective, once the processor 220 receives encoded bitstreams and related information, it would decode the encoded bitstreams and the related information according to the related information, and output to a player for video playing.

FIG. 3 illustrates a flowchart of a video coding method in accordance with an exemplary embodiment of the disclosure. The method flow in FIG. 3 may be implemented by the image processing apparatus 200 in FIG. 2. In an exemplary embodiment of the disclosure, the coding may be encoding and/or decoding, and the coding method may be an encoding method and/or a decoding method.

In the present exemplary embodiment, the processor 220 may execute an encoding process and/or a decoding process of the image processing apparatus 200. For example, the method flow in FIG. 3 may be stored as programming codes in the memory 210, and the processor 220 would execute the programming codes to perform each step in FIG. 3. When the processor 220 executes the encoding flow and before executing the flow in FIG. 3, it would receive raw video streams/frames and then perform encoding procedure thereon. When the processor 220 executes the decoding flow and before executing the flow in FIG. 3, it would receive encoded bitstreams and then perform decoding procedure thereon. In the following description, one of coding units (CU) in coding tree units (CTU) in the received raw video streams/frames or the encoded bitstreams as a basic processing unit would be described and referred to as "a current coding unit."

Referring to FIG. 2 and FIG. 3, the processor 220 of the image processing apparatus 200 would first receive a current coding unit (Step S302) and set the number of control points of the current coding unit, where the number of control points is greater than or equal to 3 (Step S304). The number of control points may be a preset value pre-entered by a user through an input device (not shown) or a system default value, or may be adaptively set according to a moving state of an object in the current coding unit.

Next, the processor 220 would generate at least one affine model according to the number of control points (Step S306) and compute an affine motion vector respectively corresponding to each of the at least one affine model (Step S308). The processor 220 would then compute a motion vector predictor of the current coding unit according to all of the at least one affine motion vector to accordingly perform inter-prediction coding on the current coding unit (Step 310). Herein, the processor 220 would apply all of the at least one affine model on all sub-blocks in the current coding unit, assign all the at least one affine motion vector to each of the sub-blocks with different weights, and thereby obtain the corresponding motion vector predictor to perform inter-prediction coding on the current coding unit. The details of Step S304-S310 would be given in the following exemplary embodiments.

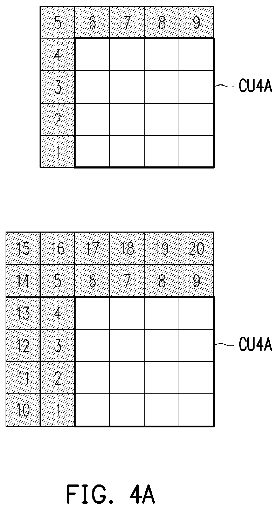

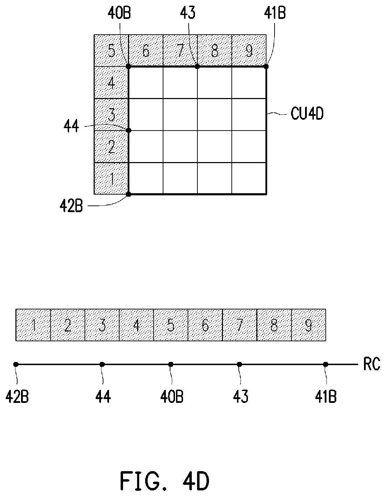

FIG. 4A and FIG. 4D illustrate setting methods of control points in accordance with an exemplary embodiment of the disclosure, where the provided examples may be implemented by the image processing apparatus 200 in FIG. 2.

In the present exemplary embodiment, the processor 220 would set the number and a reference range of control points according to user settings or system defaults. The number of control points would satisfy $1+2^N$, where N is a positive integer. The reference range of control points would be the number of rows and columns of neighboring sub-blocks at the left and upper sides of the current encoding unit and would be denoted as M, where M is a positive integer. As an example illustrated in FIG. 4A, when M=1, a reference range of control points of a current coding unit CU4A would be neighboring sub-blocks (numbered 1-9) at a first left neighboring column and a first upper neighboring row of the current coding unit CU4A; when M=2, the reference range of control points of the current coding unit CU4A would be neighboring sub-blocks (numbered 1-20) at first two left neighboring columns and first two upper neighboring rows of the current coding unit CU4A; and so on.

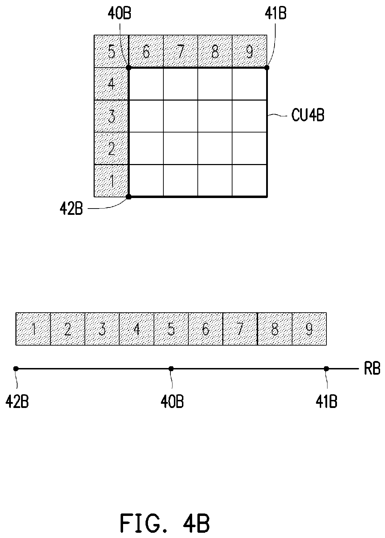

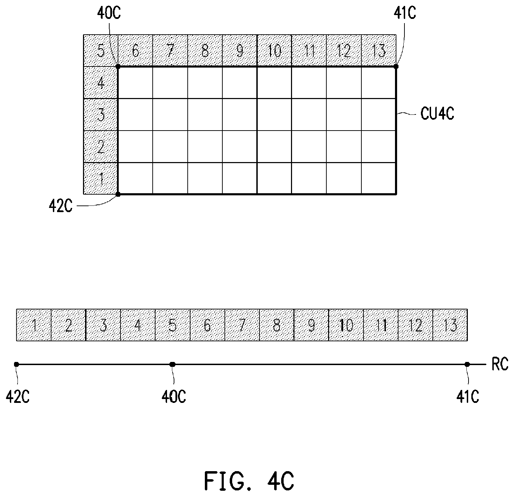

Upon completion of setting the number and the reference range of control points, the processor 220 would set positions of control points. First, the processor 220 would arrange three control points at a bottom-left corner, a top-left corner, and a top-right corner of the current coding unit. As an example illustrated in FIG. 4B, 40B, 41B, and 42B are three control points respectively at a top-left corner, an top-right corner, and a bottom-left corner of a current coding unit CU4B, i.e. corresponding to sub-blocks numbered 5, 9, and 1. From another perspective, assume that the sub-blocks numbered 1-9 are arranged at a reference line RB, since the current coding unit CU4B is a square, the three control points 40B, 41B, and 42B would be located at two endpoints and a midpoint of the reference line RB. As another example illustrated in FIG. 4C, 40C, 41C, and 42C are three control points at a top-left corner, an top-right corner, and a bottom-left corner of a current coding unit CU4C, i.e. corresponding to sub-blocks numbered 5, 13, and 1. From another perspective, assume that the sub-blocks numbered 1-13 are arranged at a reference line RC, since the current coding unit CU4C is not a square with a width greater than a length, the three control points 40C, 41C, and 42C would be respectively located at two endpoints and a left portion of the reference line RC.

The processor 220 would determine whether to add new control points between each two of the control points according to the value of N. From another perspective, the processor 220 would determine whether the number of control points arranged at the current coding unit has reached a setting value of the number of control points. In detail, when N=1, it means that the number of control points is 3 and that the number of control points arranged at the current coding unit has reached the setting value of the number of control points. Hence, the arrangement of control points has been completed. When N=2, it means that the number of control points is 5 and that the number of control points arranged at the current coding unit has not reached the setting value of the number of control points yet. Hence, the processor 220 would add two new control points between each two adjacent control points at the current coding unit. As an example of FIG. 4D, following FIG. 4B, 40B, 41B, and 42B are three control points that have already been arranged at a current coding unit CU4D. The processor 220 would additionally arrange a control point 43 at a midpoint of the control point 40B and the control point 41B, and additionally arrange a control point 44 at a midpoint of the control point 42B and the control point 40B. When N=3, it means that the number of control points is nine, the processor 220 would add four new control points between each two adjacent control points such as a midpoint of the control point 42B and the control point 44, a midpoint of the control point 44 and the control point 40B, a midpoint of the control point 40B and the control point 43, and a midpoint of the control point 43 and the control point 41B, and so on. When the processor 220 determines that the number of the control points arranged at the current coding unit 420 has not yet reached the setting value of the number of control points, it would recursively set a new control point at a midpoint of each two adjacent arranged control points until the number of the control points arranged at the current coding unit 420 reaches the setting value of the number of control points.

Next, the processor 220 would generate one or more affine models according to the motion vectors of the control points. In an exemplary embodiment, when N=1 (i.e. the number of control points is 3), the number of affine models would be 1. When N>1 (i.e. the number of control points is greater than 3), the number of affine models would be $1+2^{N-1}$. A motion vector of a control point may be computed according to coded neighboring motion vectors, where a reference frame of the coded neighboring motion vectors would be the same as a reference frame of the control point.

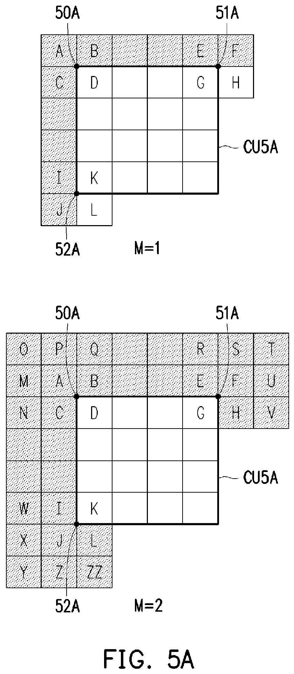

For example, FIG. 5A illustrates a schematic diagram of a searching method of neighboring motion vectors of control points. When M=1, the processor 220 would respectively search for coded motion vectors from neighboring sub-blocks of control points 50A, 51A, and 52A of a current coding unit CU5A. In terms of the control point 50A at a sub-block D, assume that sub-blocks A-C are coded sub-blocks searched out by the processor 220, and the motion vector of the control point 50A would be selected from the motion vectors A-C. For example, the processor 220 may determine whether each of the sub-blocks A-C and the current coding unit CU5A have a same reference frame in a consistent order, and the motion vector of the sub-block first satisfied such setting would be a basis for setting the motion vector of the control point 50A.

On the other hand, in terms of the control point 51A at a sub-block G, assume that sub-blocks E-F are coded sub-blocks searched out by the processor 220, and the motion vector of the control point 51A would be selected from the motion vectors of sub-blocks E-F. Since a sub-block H has not yet been coded, it would not be a basis for setting the motion vector of the control point 51A. In terms of the control point 52A at a sub-block K, assume that sub-blocks I-J are coded sub-blocks searched out by the processor 220, and the motion vector of the control point 52A would be selected from the motion vectors of sub-blocks I-J. Since a sub-block L has not yet been coded, it would not be a basis for setting the motion vector of the control point 52A.

Moreover, when M=2, the processor 220 would respectively search for coded motion vectors from the neighboring sub-blocks of control points 50A, 51A, and 52A of the current coding unit CU5A. Compared to M=1, more neighboring sub-blocks may be referenced by the control points 50A for selecting and setting motion vectors of the control points 50A, 51A, and 52A. For example, neighboring sub-blocks A-C and M-Q may be referenced by the control point 50A; neighboring sub-blocks E-F, H, R-V may be referenced by the control point 51A; and neighboring sub-blocks I, J, L, W-ZZ may be referenced by the control point 52A. The approach for selecting and setting the motion vectors of the control points 50A, 51A, and 52A may refer to the related description of M=1 and would not be repeated for brevity purposes.

In an exemplary embodiment, a motion vector of a control point may be computed based on motion vectors of other control points. For example, when the motion vector of the control point 52A is not able to be obtained according to neighboring sub-blocks thereof, it may be computed according to the motion vectors of the control points 50A and 51A. The motion vector of the control point 52A may be computed based on, for example, Eq. (2.01):

$$\begin{cases} \overline{mv}_2^x = \overline{mv}_0^x - h\dfrac{(\overline{mv}_1^y - \overline{mv}_0^y)}{w} \\ \overline{mv}_2^y = \overline{mv}_0^y + h\dfrac{(\overline{mv}_1^x - \overline{mv}_0^x)}{w} \end{cases} \qquad \text{Eq. (2.01)}$$

Herein, $\overline{mv}_2^x$ and $\overline{mv}_2^y$ denote a horizontal component and a vertical component of the motion vector of the control point 52A; $\overline{mv}_0^x$ and $\overline{mv}_0^y$ denote a horizontal component and a vertical component of the motion vector of the control point 50A; $\overline{mv}_1^x$ and $\overline{mv}_1^y$ denote a horizontal component and a vertical component of the motion vector of the control point 51A; h denotes a height of the coding unit CU5A; and w denotes a width of the coding unit CU5A.

In another exemplary embodiment, when the motion vector of the control point 51A is not able to be obtained from neighboring sub-blocks, it may be computed according to the control points 50A and 52A based on, for example, Eq. (2.02):

$$\begin{cases} \overline{mv}_1^x = \overline{mv}_0^x + h\dfrac{(\overline{mv}_2^y - \overline{mv}_0^y)}{w} \\ \overline{mv}_1^y = \overline{mv}_0^y - h\dfrac{(\overline{mv}_2^x - \overline{mv}_0^x)}{w} \end{cases} \qquad \text{Eq. (2.02)}$$

Herein, $\overline{mv}_2^x$ and $\overline{mv}_2^y$ denote a horizontal component and a vertical component of the motion vector of the control point 52A; $\overline{mv}_0^x$ and $\overline{mv}_0^y$ denote a horizontal component and a vertical component of the motion vector of the control point 50A; $\overline{mv}_1^x$ and $\overline{mv}_1^y$ denote a horizontal component and a vertical component of the motion vector of the control point 51A; h denotes a height of the coding unit CU5A; and w denotes a width of the coding unit CU5A.

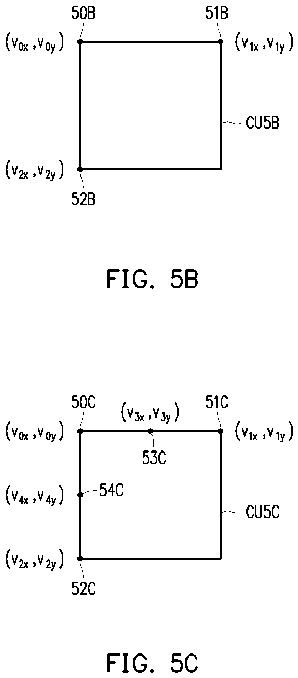

As an example, FIG. 5B illustrates a schematic diagram of a current coding unit CU5B having three control points 50B, 51B, and 52B in accordance with an exemplary embodiment of the disclosure. The processor 220 may generate an affine model of the current coding unit CU5B according to a motion vector $(v_{0x}, v_{0y})$ of the control point 50B, a motion vector $(v_{1x}, v_{1y})$ of the control point 51B, a motion vector $(v_{2x}, v_{2y})$ of the control point 52B as expressed in Eq. (2.1):

$$\begin{cases} v_x = \dfrac{(v_{1x} - v_{0x})}{w}x - \dfrac{(v_{2x} - v_{0x})}{w}y + v_{0x} \\ v_y = \dfrac{(v_{1y} - v_{0y})}{w}x + \dfrac{(v_{2x} - v_{0y})}{w}y + v_{0y} \end{cases} \qquad \text{Eq. (2.1)}$$

Herein, $(v_x, v_y)$ denotes a motion vector field of a sub-block with a sampling position $(x, y)$ in the current coding unit CU5B, and $w$ denotes a weight with respect to a width of the sub-block. In the present exemplary embodiment, after the processor 220 applies the affine model onto all sub-blocks in the current coding unit CU5B, all affine motion vectors would be distributed to each of the sub-blocks with different weights, and a corresponding motion vector predictor would then be obtained.

As another example, FIG. 5C illustrates a schematic diagram of a current coding unit CU5C having five control points 50C, 51C, 52C, 53C, and 54C. The processor 220 may generate three affine models of the current coding unit CU5C according to a motion vector $(v_{0x}, v_{0y})$ of the control point $v_0$, a motion vector $(v_{1x}, v_{1y})$ of the control point $v_1$, a motion vector $(v_{2x}, v_{2y})$ of the control point $v_2$, a motion vector $(v_{3x}, v_{2y})$ of the control point $v_3$, and a motion vector $(v_{4x}, v_{2y})$ of the control point $v_4$. Herein, each of the affine models may be generated from a different group of any three of the control points, where the five control points would be used, and a same control point may appear in different groups. In an exemplary embodiment, the three affine models of the current coding unit CU5C may be expressed by, for example, Eq. (2.2)-Eq. (2.4):

$$\begin{cases} V_{x1} = \dfrac{(v_{0x}-v_{4x})}{w}x - \dfrac{(v_{2x}-v_{4x})}{w}y + v_{4x} \\ V_{y1} = \dfrac{(v_{0y}-v_{4y})}{w}x - \dfrac{(v_{2y}-v_{4y})}{w}y + v_{4y} \end{cases} \qquad \text{Eq. (2.2)}$$

$$\begin{cases} V_{x2} = \dfrac{(v_{3x}-v_{0x})}{w}x - \dfrac{(v_{4x}-v_{0x})}{w}y + v_{0x} \\ V_{y2} = \dfrac{(v_{3y}-v_{0y})}{w}x - \dfrac{(v_{4y}-v_{0y})}{w}y + v_{0y} \end{cases} \qquad \text{Eq. (2.3)}$$

$$\begin{cases} V_{x3} = \dfrac{(v_{1x}-v_{3x})}{w}x - \dfrac{(v_{0x}-v_{3x})}{w}y + v_{3x} \\ V_{y3} = \dfrac{(v_{1y}-v_{3y})}{w}x - \dfrac{(v_{0y}-v_{3y})}{w}y + v_{3y} \end{cases} \qquad \text{Eq. (2.4)}$$

Herein, $(v_{x1}, v_{y1})$, $(v_{x2}, v_{y2})$, and $(v_{x3}, v_{y3})$ denote a motion vector field of a sub-block with a sampling position $(x,y)$ in the current coding unit CU5B, and $w$ denotes a weight with respect to a width of the sub-block. After the processor 220 applies the affine models onto all sub-blocks in the current coding unit CU5C, three affine motion vectors $(v_{x1}, v_{y1})$, $(v_{x2}, v_{y2})$, and $(v_{x3}, v_{y3})$ would be generated, and all the affine motion vectors would be distributed to each of the sub-blocks with different weights. The processor may generate a motion vector predictor of each of the sub-blocks based on Eq. (2.5):

$$\begin{cases} X' = w_1 V_{x1} + w_2 V_{x2} + w_3 V_{x3} \\ Y' = w_1 V_{y1} + w_2 V_{y2} + w_3 V_{y3} \end{cases} \qquad \text{Eq. (2.5)}$$

Herein, X' and Y' denote motion vector predictors of a sub-block with respect to a horizontal direction and a vertical direction, and $w_1$, $w_2$, and $w_3$ denote a weight corresponding to a distance between the sub-block and each of the three affine motion vectors.

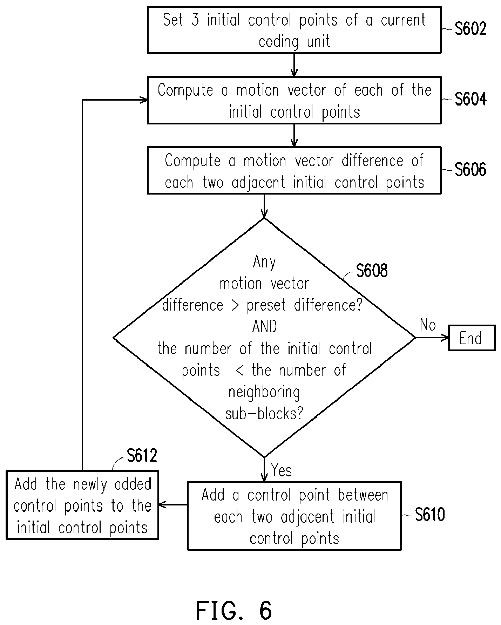

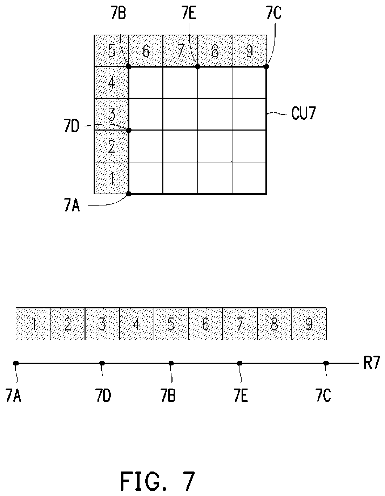

FIG. 6 illustrates a flowchart of a setting method of control points in accordance with an exemplary embodiment of the disclosure, and FIG. 7 illustrates a schematic diagram of a setting method of control points in accordance with an exemplary embodiment of the disclosure. The following setting method may be implemented by the image processing apparatus 200 for encoding or decoding. In the present exemplary embodiment, the processor 220 would adaptively set the number of control points according to a moving status of an object in a current coding unit.

Referring to FIG. 2 and Fig. 6, the processor 220 would set three initial control points of a current coding unit (Step S602). In the present exemplary embodiment, M=1 would be a preset value of a reference range for illustration, and the three initial control points would be respectively arranged at a bottom-left corner, a top-left corner, and a top-right corner of the current coding block, referred to as a first initial control point, a second initial control point, and a third initial control point hereafter. As an example illustrated in FIG. 7, 7A, 7B, and 7C of a current coding unit CU7 respectively represent the first initial control point, the second initial control point, and the third initial control point. As a side note, in other exemplary embodiments, the processor 220 may also set the reference range according to user settings or system defaults before Step S602.

Next, the processor 220 would compute a motion vector of each of the initial control points (Step S604), compute a motion vector difference between each two adjacent initial control points (Step S606), and determine whether there exists any motion vector difference being greater than a preset difference and whether the number of the initial control points arranged at the current coding unit is less than the number of neighboring sub-blocks at the top and at the left of the current coding unit (Step S608). It should be noted that, each two adjacent initial control points herein refers to two adjacent initial control points sequentially arranged at corners of the current coding unit. As an example illustrated in FIG. 7, the processor 220 would compute a motion vector difference $\|V_A - V_B\|$ (referred to as "a first motion vector difference") between a motion vector $V_A$ of the first initial control point 7A and a motion vector $V_B$ of the second initial control point 7B, compute a motion vector difference $\|V_B - V_C\|$ (referred to as "a second motion vector difference") between the motion vector $V_B$ of the second initial control point 7B and a motion vector $V_C$ of the third control point 7C, and determine whether any of the first motion vector difference $\|V_A - V_B\|$ and the second motion vector difference $\|V_B - V_C\|$ is greater than a preset difference d.

When the processor 220 determines that no motion vector difference is greater than the preset difference, in one exemplary embodiment, it means that all the motion vectors are highly similar, and the existing initial control points correspond to a same moving object. Therefore, no new control point is required to be added. Moreover, when the number of initial control points arranged at the current coding unit is not less than (or reaches) the number of neighboring sub-blocks at the top and at the left of the current coding unit, no new control point is required to be added either. The processor 220 may end the setting process of control points and generate an affine model according to the motion vectors of the initial control points. As an example illustrated in FIG. 7, when the processor 220 determines that $\|V_A - V_B\| < d$ and $\|V_B - V_C\| < d,$ it would generate an affine model by using the motion vector $V_A$ of the first initial control point 7A, the motion vector $V_B$ of the second initial control point 7B, and the motion vector $V_C$ of the third initial control point 7C, thereby compute an affine motion vector respectively corresponds to each of the affine models, and compute a motion vector predictor of the current coding unit according to all the affine motion vectors to accordingly perform inter-prediction coding on the current coding unit.

On the other hand, when the processor 220 determines that any of the motion vector difference is greater than the preset difference, in one exemplary embodiment, it means that the existing initial control points correspond to different moving objects. Therefore, control points may be added to comprehensively described all the moving objects in the current coding unit for a more precise prediction in the follow-up steps. Herein, when the processor 220 further determines that the number of initial control points arranged at the current coding unit is not less than (or reaches) the number of neighboring sub-blocks at the top and at the left of the current coding unit, the processor 220 would add a control point between each two adjacent initial control points (Step S610) and add the newly added control points to the initial control points (Step S612). In other words, the control point added between the first initial control point and the second initial control point would become a fourth initial control point, and the control point added between the second initial control point and the third initial control point would become a fifth initial control point. Next, the processor 220 would return to Step S604 to repeat the follow-up steps until the motion vector difference of each two adjacent control points is less than the preset difference or the number of the initial control points arranged at the current coding unit reaches the number of neighboring sub-blocks at the top and at the left of the current coding unit.

As an example of FIG. 7, when the processor 220 determines that $\|V_A - V_B\| > d$ and/or $\|V_B - V_C\| > d,$ the processor 220 would add a control point 7D at a midpoint of the first initial control point 7A and the second initial control point 7B as well as add a control point 7E at a midpoint of the second initial control point 7B and the third initial control point 7C. Next, the processor 220 would compute a motion vector difference $\|V_A - V_D\|$ between the motion vector $V_A$ of the first initial control point 7A and the motion vector $V_D$ of the fourth initial control point 7D, a motion vector difference $\|V_D - V_B\|$ between the motion vector $V_D$ of the fourth initial control point 7D and the motion vector $V_B$ of the second initial control point 7B, a motion vector difference $\|V_B - V_E\|$ between the motion vector $V_B$ of the second initial control point 7B and the motion vector $V_E$ of the fifth initial control point 7E, a motion vector difference $\|V_E - V_C\|$ between the motion vector $V_E$ of the fifth initial control point 7E and the motion vector $V_C$ of the third initial control point 7C, and then determine whether any one of the four motion vector differences is greater than the preset difference d. When any of the fourth motion vector differences is greater than the preset difference d, the processor 220 would further add new control points at a midpoint of each two adjacent control points among the five initial control points 7A-7E. In other words, when the processor 220 determines that any motion vector difference of each two adjacent initial control points of the current coding unit CU7 is not less than the preset difference, it would recursively arrange a new control point at a midpoint of each two adjacent arranged initial control points until the motion vector difference of each two adjacent control points of the current coding unit CU7 is less than the preset difference or the number of the initial control points arranged at the current coding unit CU7 reaches the number of neighboring sub-blocks at the top and at the left of the current coding unit CU7 (e.g. the number of initial control points allowed to be arranged in FIG. 7 would be at most 9).

When the four differences are all less than the preset difference d, the processor 220 would generate three affine models by using the motion vector $V_A$ of the first initial control point 7A, the motion vector $V_B$ of the second initial control point 7B, the motion vector $V_C$ of the third initial control point 7C, the motion vector $V_D$ of the fourth initial control point 7D, and the motion vector $V_E$ of the fifth initial control point 7E, thereby generate an affine motion vector corresponding to each of the affine models respectively, and compute a motion vector predictor of the current coding unit according to all the affine motion vectors to accordingly perform inter-prediction coding on the current coding unit.

In summary, the video coding method and the image processing apparatus proposed in the disclosure would generate at least one affine model by using three or more control points in a coding unit to respectively compute a corresponding affine motion vector and compute a motion vector predictor of the coding unit according to the affine motion vector. The video coding technique proposed in the disclosure would solve the problem of insufficient efficiency in high-resolution video due to two control points and a single affine model so as to enhance the precision of inter-prediction coding and coding efficiency on video images.

Although the disclosure has been provided with embodiments as above, the embodiments are not intended to limit the disclosure. It will be apparent to those skilled in the art that various modifications and variations can be made to the structure of the disclosed embodiments without departing from the scope or spirit of the disclosure. In view of the foregoing, it is intended that the disclosure falls within the scope of the following claims.

[Reference Signs List]

100: block
110, 120, 40B,41B,42B,40C, 41C, 42C, 43, 44, 50A, 51A, 52A, 50B, 51B, 52B, 50C, 51C, 52C, 7A, 7B, 7C, 7D, 7E: control point
200: image processing apparatus
210: memory
220: processor
S302~S310, S602~S612: step
CU1: coding unit
CU4A, CU4B, CU4C, CU4D, CU5A, CU7: current coding unit
1 ~20: number
RB, RC, R7: reference line
A, B, C, D, E, F, G, H, I, J, K, L, M, N, O, P, Q, R, S, T, U, V, W, X, Y, Z, ZZ: sub-block

**Claims**

1. A video coding method, **characterized in that** the method is applicable to an image processing apparatus (200) and comprises:

   receiving and setting the number of control points of a current coding unit (CU4A, CU4B, CU4C, CU4D, CU5A, CU7), wherein the number of control points is greater than or equal to 3;
   generating at least one affine model according to the number of control points;
   computing an affine motion vector respectively corresponding to each of the at least one affine model; and
   computing a motion vector predictor of the current coding unit (CU4A, CU4B, CU4C, CU4D, CU5A, CU7) based on the at least one affine motion vector so as to accordingly perform inter-prediction coding on the current coding unit (CU4A, CU4B, CU4C, CU4D, CU5A, CU7).

2. The method according to claim 1, **characterized in that** the number of control points is $1+2^N$, and wherein N is a positive integer.

3. The method according to claim 2, **characterized in that** when N=1, the number of the at least one affine model is 1.

4. The method according to claim 2, **characterized in that** when N>1, the number of the at least one affine model is $1+2^{N-1}$.

5. The method according to claim 1, **characterized in that** when the setting value of the number of control points is 3, the method further comprises:

   obtaining a setting value of the number of control points; and
   arranging a first control point (40B, 40C, 50A, 50B, 50C), a second control point (41B, 41C, 51A, 51B, 51C), a third control point (42B, 42C, 52A, 52B, 52C) respectively at a top-left corner, a top-right corner, and a bottom-left corner of the current coding unit (CU4B, CU4C, CU4D, CU5A, CU7), and constructing the at least one affine model by using a motion vector of the first control point (40B, 40C, 50A, 50B, 50C), a motion vector of the second control point (41B, 41C, 51A, 51B, 51C), and a motion vector of the third control point (42B, 42C, 52A, 52B, 52C), wherein the number of the at least one affine model is 1.

6. The method according to claim 1, **characterized in that** when the setting value of the number of control points is $1+2^N$ and when N>1, the method further comprises:

   obtaining a setting value of the number of control points;
   arranging a first control point (42B), a second control point (40B), a third control point (41B) respectively at a bottom-left corner, a top-left corner, and a top-right corner of the current coding unit (CU4D);

arranging a fourth control point (44) between the first control point (42B) and the second control point (40B), and arranging a fifth control point (43) between the second control point (40B) and the third control point (41B); determining whether the number of the control points arranged at the current coding unit (CU4D) has reached the setting value of the number of control points; if the determination is negative, recursively arranging a new control point between each two adjacent arranged control points until the number of the control points arranged at the current coding unit (CU4D) has reached the setting value of the number of control points; and if the determination is affirmative, constructing the at least one affine model by using a motion vector of each of the control points arranged at the current coding unit (CU4D), wherein the number of the at least one affine model is $1+2^{N-1}$, wherein each of the affine models is constructed by a different group of three of the control points.

7.  The method according to claim 1, **characterized in that** the method further comprises:
    arranging a first initial control point (7A), a second initial control point (7B), a third initial control point (7C) respectively at a bottom-left corner, a top-left corner, and a top-right corner of the current coding unit (CU7).

8.  The method according to claim 7, **characterized in that** the step of setting the number of control points of the current coding unit (CU7) comprises:

    computing a first motion vector difference between a motion vector of the first initial control point (7A) and a motion vector of the second initial control point (7B); computing a second motion vector difference between a motion vector of the second initial control point (7B) and a motion vector of the third initial control point (7C); and determining whether to add a plurality of new control points to the current coding unit (CU7) according to the first motion vector difference and the second motion vector difference.

9.  The method according to claim 8, **characterized in that** the step of determining whether to add the new control points to the current coding unit (CU7) according to the first motion vector difference and the second motion vector difference comprises:
    when the first motion vector difference and the second motion vector difference are both less than a preset difference, not adding the new control points, setting the number of control points to the number of the initial control points arranged at the current coding unit (CU7), and constructing the at least one affine model by using a motion vector of the first initial control point (7A), a motion vector of the second initial control point (7B), and a motion vector of the third initial control point (7C), and wherein the number of the at least one affine model is 1.

10. The method according to claim 8, **characterized in that** the step of determining whether to add the new control points to the current coding unit (CU7) according to the first motion vector difference and the second motion vector difference comprises:

    when at least one of the first motion vector difference and the second motion vector difference is greater than a preset difference, adding a fourth initial control point (7D) between the first initial control point (7A) and the second initial control point (7B), and adding a fifth initial control point (7E) between the second initial control point (7B) and the third initial control point (7C); determining whether a motion vector difference between each two adjacent of the initial control points arranged at the current coding unit (CU7) is less than a preset difference; if the determination is negative, recursively arranging a new control point between each two adjacent arranged initial control points until the motion vector difference between each two adjacent of the initial control points arranged at the current coding unit (CU7) is less than the preset difference or until the number of the control points arranged at the current coding unit (CU7) has reached the number of a plurality of neighboring sub-blocks (1-9) at an upper side and a left side of the current coding unit (CU7); and if the determination is affirmative, constructing the at least one affine model by using the motion vector of each of the initial control points arranged at the current coding unit (CU7), wherein the number of the at least one affine model is $1+2^{N-1}$, wherein each of the affine models is constructed by a different group of three of the control points.

11. An image processing apparatus (200), **characterized in that** the image processing apparatus (200) comprises:

    a memory (210), configured to store data;
    a processor (220), coupled to the memory (210) and configured to:

receive and set the number of control points of a current coding unit (CU4A, CU4B, CU4C, CU4D, CU5A, CU7), wherein the number of control points is greater than or equal to 3;

generate at least one affine model according to the number of control points;

compute an affine motion vector respectively corresponding to each of the at least one affine model; and

compute a motion vector predictor of the current coding unit (CU4A, CU4B, CU4C, CU4D, CU5A, CU7) based on the at least one affine motion vector so as to accordingly perform inter-prediction coding on the current coding unit (CU4A, CU4B, CU4C, CU4D, CU5A, CU7).

12. The image processing apparatus (200) according to claim 11, **characterized in that** the number of control points is $1+2^N$, and wherein N is a positive integer.

13. The image processing apparatus (200) according to claim 12, wherein when N=1, the number of the at least one affine model is 1.

14. The image processing apparatus (200) according to claim 12, **characterized in that** when N>1, the number of the at least one affine model is $1+2^{N-1}$

15. The image processing apparatus (200) according to claim 11, **characterized in that** when the setting value of the number of control points is 3, the processor (220) is further configured to:

obtain a setting value of the number of control points;

arrange a first control point (40B, 40C, 50A, 50B, 50C), a second control point (41B, 41C, 51A, 51B, 51C), a third control point (42B, 42C, 52A, 52B, 52C) respectively at a top-left corner, a top-right corner, and a bottom-left corner of the current coding unit (CU4B, CU4C, CU5A, CU5B, CU5C); and

construct the at least one affine model by using a motion vector of the first control point (40B, 40C, 50A, 50B, 50C), a motion vector of the second control point (41B, 41C, 51A, 51B, 51C), and a motion vector of the third control point (42B, 42C, 52A, 52B, 52C), wherein the number of the at least one affine model is 1.

16. The image processing apparatus (200) according to claim 11, **characterized in that** when the setting value of the number of control points is $1+2^N$ and when N>1, the processor (220) is further configured to:

obtain a setting value of the number of control points;

arrange a first control point (42B), a second control point (40B), a third control point (41B) respectively at a bottom-left corner, a top-left corner, and a top-right corner of the current coding unit (CU4D);

arrange a fourth control point (44) between the first control point (42B) and the second control point (40B), and arrange a fifth control point (43) between the second control point (40B) and the third control point (41B);

determine whether the number of the control points arranged at the current coding unit (CU4D) has reached the setting value of the number of control points;

if the determination is negative, recursively arrange a new control point between each two adjacent arranged control points until the number of the control points arranged at the current coding unit (CU4D) has reached the setting value of the number of control points; and

if the determination is affirmative, construct the at least one affine model by using a motion vector of each of the control points arranged at the current coding unit (CU4D), wherein the number of the at least one affine model is $1+2^{N-1}$, and wherein each of the affine models is constructed by a different group of three of the control points.

17. The image processing apparatus (200) according to claim 11, **characterized in that** the processor (220) is further configured to:

arrange a first initial control point (7A), a second initial control point (7B), a third initial control point (7C) respectively at a bottom-left corner, a top-left corner, and a top-right corner of the current coding unit (CU7).

18. The image processing apparatus (200) according to claim 17, **characterized in that** the processor (220) computes a first motion vector difference between a motion vector of the first initial control point (7A) and a motion vector of the second initial control point (7B), computes a second motion vector difference between a motion vector of the second initial control point (7B) and a motion vector of the third initial control point (7C), and determines whether to add a plurality of new control points to the current coding unit (CU7) according to the first motion vector difference and the second motion vector difference.

19. The image processing apparatus (200) according to claim 18, **characterized in that** when the first motion vector difference and the second motion vector difference are both less than a preset difference, the processor (220) does not add the new control points, sets the number of control points to the number of the initial control points arranged at the current coding unit (CU7), and construct the at least one affine model by using a motion vector of the first initial control point (7A), a motion vector of the second initial control point (7B), and a motion vector of the third initial control point (7C), wherein the number of the at least one affine model is 1.

20. The image processing apparatus (200) according to claim 18, **characterized in that** the processor (220) is further configured to:

   when at least one of the first motion vector difference and the second motion vector difference is greater than a preset difference, add a fourth initial control point (7D) between the first initial control point (7A) and the second initial control point (7B), and add a fifth initial control point (7E) between the second initial control point (7B) and the third initial control point (7C);
   determine whether a motion vector difference between each two adjacent of the initial control points arranged at the current coding unit (CU7) is less than a preset difference;
   if the determination is negative, recursively arrange a new control point between each two adjacent arranged initial control points until the motion vector difference between each two adjacent of the initial control points arranged at the current coding unit (CU7) is less than the preset difference or until the number of the control points arranged at the current coding unit (CU7) has reached the number of a plurality of neighboring sub-blocks (1-9) at an upper side and a left side of the current coding unit (CU7); and
   if the determination is affirmative, construct the at least one affine model by using the motion vector of each of the initial control points arranged at the current coding unit (CU7), wherein the number of the at least one affine model is $1+2^{N-1}$, wherein each of the affine models is constructed by a different group of three of the control points.

FIG. 1A

FIG. 1B

FIG. 1C

```
        ┌──────────────────────── 200
        │           210        220
        │  ┌──────────┐   ┌───────────┐
        │  │  memory  │───│ processor │
        │  └──────────┘   └───────────┘
        │        image processing apparatus
        └──────────────────────────────
```

FIG. 2

```
┌─────────────────────────────────────────┐
│        Receive a current coding unit      │─ S302
└─────────────────────────────────────────┘
                    │
                    ▼
┌─────────────────────────────────────────┐
│ Set the number of control points of the  │
│ current coding unit, where the number of  │─ S304
│ control points is greater than or equal   │
│                  to 3                      │
└─────────────────────────────────────────┘
                    │
                    ▼
┌─────────────────────────────────────────┐
│ Generate at least one affine model        │
│ according to the number of control points │─ S306
└─────────────────────────────────────────┘
                    │
                    ▼
┌─────────────────────────────────────────┐
│ Compute an affine motion vector           │
│ respectively corresponding to each of the │─ S308
│ at least one affine model                  │
└─────────────────────────────────────────┘
                    │
                    ▼
┌─────────────────────────────────────────┐
│ Compute a motion vector predictor of the  │
│ current coding unit according to all the   │
│ at least one affine motion vector to       │─ S310
│ accordingly perform inter-prediction       │
│ coding on the current coding unit          │
└─────────────────────────────────────────┘
```

FIG. 3

FIG. 4A

FIG. 4B

FIG. 4C

FIG. 4D

FIG. 5A

$(v_{0x}, v_{0y})$  50B  51B  $(v_{1x}, v_{1y})$

CU5B

$(v_{2x}, v_{2y})$  52B

FIG. 5B

50C  $(v_{3x}, v_{3y})$  51C

$(v_{0x}, v_{0y})$  $(v_{1x}, v_{1y})$

53C

$(v_{4x}, v_{4y})$  54C

CU5C

$(v_{2x}, v_{2y})$

52C

FIG. 5C

Set 3 initial control points of a current coding unit ~S602

Compute a motion vector of each of the initial control points ~S604

Compute a motion vector difference of each two adjacent initial control points ~S606

Any motion vector difference > preset difference? AND the number of the initial control points < the number of neighboring sub-blocks? ~S608

No → End

Yes

Add a control point between each two adjacent initial control points ~S610

Add the newly added control points to the initial control points ~S612

FIG. 6

FIG. 7

Europäisches
Patentamt

European
Patent Office

Office européen
des brevets

## EUROPEAN SEARCH REPORT

Application Number

EP 18 21 2146

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIXIN LIN ET AL: "Affine transform prediction for next generation video coding", 113. MPEG MEETING; 19-10-2015 - 23-10-2015; GENEVA; (MOTION PICTURE EXPERT GROUP OR ISO/IEC JTC1/SC29/WG11), no. m37525, 26 October 2015 (2015-10-26), XP030065892, * the whole document * | 1-20 | INV. H04N19/105 H04N19/139 H04N19/176 H04N19/54 |
| X | ZOU F ET AL: "Improved affine motion prediction", 3. JVET MEETING; 26-5-2016 - 1-6-2016; GENEVA; (THE JOINT VIDEO EXPLORATION TEAM OF ISO/IEC JTC1/SC29/WG11 AND ITU-T SG.16 ), no. JVET-C0062, 17 May 2016 (2016-05-17), XP030150163, | 1-3,5,7, 11-13, 15,17 | |
| A | * abstract; figure 1 * * Sections 1, 2 * | 4,6, 8-10,14, 16,18-20 | |
| X | HUANG HAN ET AL: "Control-Point Representation and Differential Coding Affine-Motion Compensation", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 23, no. 10, 1 October 2013 (2013-10-01), pages 1651-1660, XP011528531, ISSN: 1051-8215, DOI: 10.1109/TCSVT.2013.2254977 [retrieved on 2013-09-30] * abstract; figures 1-5 * * Section II * | 1-20 | H04N |

TECHNICAL FIELDS SEARCHED (IPC)

-/--

The present search report has been drawn up for all claims

| Place of search | Date of completion of the search | Examiner |
|---|---|---|
| The Hague | 9 April 2019 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 21 2146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/184261 A1 (HUAWEI TECH CO LTD [CN]) 24 November 2016 (2016-11-24) * figure 5 * | 6,10,16, 20 | |
| A,P | & EP 3 291 557 A1 (HUAWEI TECH CO LTD [CN]) 7 March 2018 (2018-03-07) * abstract; figure 5 * * paragraph [0106] - paragraph [0124] * ----- | 6,10,16, 20 | |
| A | WO 2012/012582 A1 (DOLBY LAB LICENSING CORP [US]; HE YUWEN [US] ET AL.) 26 January 2012 (2012-01-26) * abstract; figures 4, 5 * * paragraph [0044] * ----- | 6,10,16, 20 | |

TECHNICAL FIELDS
SEARCHED (IPC)

The present search report has been drawn up for all claims

| Place of search | Date of completion of the search | Examiner |
|---|---|---|
| The Hague | 9 April 2019 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 499 882 A1**

## ANNEX TO THE EUROPEAN SEARCH REPORT
## ON EUROPEAN PATENT APPLICATION NO.

EP 18 21 2146

09-04-2019

| Patent document cited in search report | Publication date | Patent family member(s) | Publication date |
|---|---|---|---|
| WO 2016184261 A1 | 24-11-2016 | AU 2016264380 A1 | 14-12-2017 |
| | | BR 112017024467 A2 | 24-07-2018 |
| | | CA 2985868 A1 | 24-11-2016 |
| | | CN 106303543 A | 04-01-2017 |
| | | CN 109005407 A | 14-12-2018 |
| | | EP 3291557 A1 | 07-03-2018 |
| | | JP 2018520558 A | 26-07-2018 |
| | | KR 20180006961 A | 19-01-2018 |
| | | SG 11201709418U A | 28-12-2017 |
| | | US 2018070102 A1 | 08-03-2018 |
| | | WO 2016184261 A1 | 24-11-2016 |
| WO 2012012582 A1 | 26-01-2012 | CN 103026707 A | 03-04-2013 |
| | | EP 2596636 A1 | 29-05-2013 |
| | | EP 2675163 A1 | 18-12-2013 |
| | | JP 5606625 B2 | 15-10-2014 |
| | | JP 2013535901 A | 12-09-2013 |
| | | US 2013121416 A1 | 16-05-2013 |
| | | WO 2012012582 A1 | 26-01-2012 |

EPO FORM P0459

For more details about this annex : see Official Journal of the European Patent Office, No. 12/82